# EUROPÄISCHE PATENTSCHRIFT

(11) **EP 0 303 087 B1**
(45) Veröffentlichungstag und Bekanntmachung des Hinweises auf die Patenterteilung: **29.09.1993**
(21) Anmeldenummer: 88111928.3
(22) Anmeldetag: 25.07.1988
(51) Int. Cl.: C08F 8/00

(54) **Polymere Dihydroxyverbindungen und ihre Verwendung als Stabilisatoren für Polymere**
Polymeric dihydroxy compounds and use thereof as stabilizers for polymers
Composés dihydroxy polymères et leur application comme stabilisants de polymères

(30) Priorität: 04.08.1987 DE 3725848
(43) Veröffentlichungstag der Anmeldung: 15.02.1989
(73) Patentinhaber: BAYER AG, 51368 Leverkusen (DE)
(72) Erfinder: Eichenauer, Herbert, Dr., D-4047 Dormagen 1 (DE); Höcker, Hartwig, Prof. Dr., D-5100 Aachen (DE); Heitz, Thomas, D-5110 Alsdorf (DE)

(56) Entgegenhaltungen:
- DE-A- 1 520 652
- DE-A- 2 318 809
- US-A- 3 177 190
- US-A- 3 646 222

## Beschreibung

Die Erfindung betrifft polymere Dihydroxyverbindungen, ein Verfahren zur Herstellung dieser Verbindungen sowie mit diesen Dihydroxyverbindungen augerüstete Polymerisate.

Synthetische Polymere, insbesondere solche mit ungesättigten Bindungen in der Molekülkette, unterliegen unter der Einwirkung von Sauerstoff, Hitze oder Licht Abbaureaktionen, die zu einer Verschlechterung der Eigenschaften und zu Problemen beim praktischen Einsatz der aus den Polymeren hergestellten Teile führen.

Zur Verhinderung derartiger Abbaueffekte wurden bereits zahlreiche Stabilisatoren für Polymere vorgeschlagen, insbesondere Verbindungen mit phenolischen Hydroxylgruppen (siehe z.B. R. Gächter und H. Müller: Taschenbuch der Kunststoff-Additive, Carl-Hanser-Verlag München Wien 1979).

DE-A-2318809 betrifft Pfropfcopolymere, die durch anionische Polymerisation von Vinylmonomeren, wie Styrol und anschließende Copolymerisation mit einer zweiten Vinylverbindung, wie Diphenylethylen erhalten werden Diese lebenden Copolymeren können mit einem halogenenthaltenden Terminierungsmittel, das auch einen polymerisierbaren Anteil enthält, wie Vinylbenzylchlorid oder Vinylchloracetat weiter umgesetzt werden. Die bekannten makromolekularen Monomeren können zu Copolymeren umgesetzt werden, die als Legierungs- oder Fließmittel für polymere Mischungen dienen.

Es wurde gefunden, daß phenolische Hydroxylgruppen enthaltende polymere Verbindungen der Formel (I) Substanzen mit besonders guter Wirksamkeit als Stabilisatoren bei guter Verträglichkeit mit Polymeren und insbesondere geringer Flüchtigkeit darstellen. 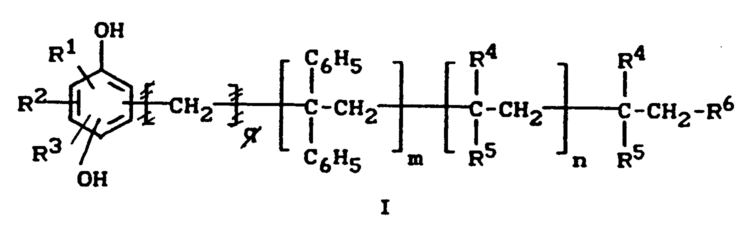
wobei
- R¹, R², R³: = H, C₁₋₄-Alkyl,
- R⁴: = H, C₁₋₄-Alkyl,
- R⁵: = -C₆H₅, -C₆H₄CH₃, -CH=CH₂, -CO₂R⁷, Heteroaryl
- R⁶: = C₁₋₄-Alkyl, Aryl, H
- R⁷: = C₁₋₄-Alkyl,
- m: = 0,1,
- n: = 5. - 100

Gegenstand der Erfindung sind polymere Dihydroxyverbindungen der Formel (I), die einen Polymerisationsgrad von 5 bis 100, vorzugsweise von 5 bis 30 und besonders bevorzugt von 10 bis 25 besitzen.

Ein weiterer Gegenstand der Erfindung ist ein Verfahren zur Herstellung dieser polymeren Dihydroxyverbindungen über die Stufen:
1.) Anionische Polymerisation anionisch polymerisierbarer Vinylmonomeren, gegebenenfalls
2.) Verminderung der Reaktivität durch Umsetzung des lebenden Anions mit 1,1-Diphenylethylen,
3.) Umsetzung des resultierenden Produktes mit einer Verbindung der Formel (II) 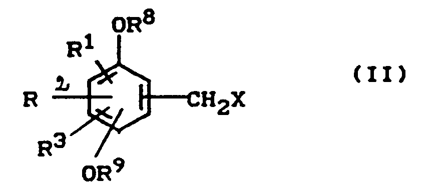
   - R⁸, R⁹: = C₁-C₄-Alkyl, -SiR¹⁰R¹¹R¹²,
   - R¹⁰, R¹¹, R¹²: = C₁₋₄-Alkyl, -C₆H₅,
   - X: = Cl, Br, I
4.) Isolierung des danach resultierenden Polymeren und
5.) Abspaltung der Schutzgruppen R⁸ und R⁹.

Dabei Polymerisiert man anionisch polymerisierbare Vinylmonomere in einem aromatischen Lösungsmittel oder einem Ether mittels einer Alkylalkalimetall- bzw. Arylalkalimetall-Verbindung unter Ausbildung eines lebenden Polymeren Anions, setzt gegebenenfalls 1,1-Diphenylethylen zur Verminderung der Reaktivität des Polymeren Anions zu, wonach man mit einem Benzylhalogenid (II) umsetzt und anschließend eine Etherspaltung oder eine Abspaltung von Trialkylsilylresten unter Bildung der Hydroxylgruppen durchführt.

Anionisch polymerisierbare Vinylmonomere im Sinne der Erfindung sind beispielsweise Styrol, p-Methylstyrol, α-Methylstyrol, Butadien, Isopren, Methylmethacrylat oder Mischungen daraus. Bevorzugtes Monomer ist Styrol.

Aromatische Lösungsmittel im Sinne der Erfindung sind Benzol, Toluol; Ether im Sinne der Erfindung sind Tetrahydrofuran und Dioxan, insbesondere Tetrahydrofuran ("THF"), zum Erzielen bestimmter Molekulargewichte kann man auch in Gemischen aus aromatischen Kohlenwasserstoffen und Ethern arbeiten.

Alkylalkalimetallverbindungen im Sinne der Erfindung sind Butyllithium, insbesondere sekundär-Butyllithium, als Arylalkalimetallverbindungen werden bevorzugt Na-Naphthalin, K-Naphthalin oder Phenyllithium eingesetzt.

Als Verbindungen der Formel (II) sind z.B. 2,5-Dimethoxybenzylchlorid, 2,5-Dimethoxybenzylbromid, 2,5-Dimethoxybenzyliodid 2,6-Dimethoxybenzylbromid, 2,4-Dimethoxybenzylbromid, 2,3-Dimethoxybenzylbroimid, 2,5-Di(trimethylsilyloxy)benzylbromid, 2,4-Di(trimethylsilyloxy)benzylbromid, 2,5-Dimethoxy-3-methylbenzylbromid, 2,5-Dimethoxy-3,4-dimethylbenzylbromid geeignet, bevorzugt ist 2,5-Dimethoxybenzylbromid.

Die Polymerisation und die Umsetzung mit der Verbindung (II) erfolgt zwischen -100°C und 60°C, vorzugsweise zwischen Raumtemperatur und 0°C.

Da das erfindungsgemäße Verfahren mittels sogenannter lebender Anionen arbeitet, sind natürlich Bedingungen einzuhalten, die sich nicht nachteilig auf die lebenden Anionen auswirken, z.B. Arbeiten unter inerten, wasserfreien Bedingungen; derartige Bedingungen sind Stand der Technik.

Die Isolierung des resultierenden Polymeren kann durch Ausfällen aus der Polymerlösung, vorzugsweise unter Verwendung von Methanol, erfolgen.

Die Abspaltung der Schutzgruppen führt man vorzugsweise in Lösung unter Verwendung geeigneter Reagenzien durch.

Geeignet hierzu ist z.B. eine Behandlung des in Chloroform gelösten Polymeren mit Trimethyliodsilan oder eine Behandlung des in einem Acetonitril/Toluol-Gemisch gelösten Polymeren mit einem Gemisch aus Trimethylchlorsilan und Natriumiodid oder eine Behandlung des Polymeren mit einer Säure bzw. einer Lewissäure, z.B. Bortribromid.

Die resultierenden Polymerisate besitzen über die Initiatormenge steuerbare Polymerisationsgrade von 5 bis 100.

Ein weiterer Gegenstand der vorliegenden Erfindung ist die Verwendung der polymeren Dihydroxyverbindungen (I) als Stabilisatoren bei der Stabilisierung von synthetischen Polymeren, wobei zusätzlich schwefelhaltige oder phosphorhaltige Verbindungen als Co-Stabilisatoren mitverwendet werden können.

Besondere Wirksamkeit zeigen die erfindungsgemäßen Verbindungen bei der Stabilisierung von Kautschuken, z.B. von Polybutadien, Polyisopren, Polychloropren, Styrol-Butadien-Copolymerisaten, Acrylnitril-Butadien-Copolymerisaten, Acrylatkautschuken, Ethylen-Propylen-Kautschuken oder EPDM-Kautschuken (Ethylen/Propylen/Dien-Kautschuke, die als Dien ein nichtkonjugiertes Dien wie z.B. Hexadien-1,5 oder Norbornadien in kleinen Mengen enthalten), von Thermoplasten, z.B. Polyethylen, Polypropylen, Polystyrol, Polymethylmethacrylat, Styrol/Acrylnitril-Copolymerisaten, Polycarbonat, Polyamid, Polyester und besonders von kautschukmodifizierten Thermoplasten, z.B. Acrylnitril/Butadien/Styrol-Terpolymerisaten (ABS), Methylmethacrylat/Butadien/Styrol-Terpolymerisate (MBS), schlagzähem Polystyrol (HIPS) oder ABS/Polycarbonat-Gemischen.

Als Co-Stabilisatoren sind z.B. Dilaurylthiodipropionat oder Trisnonylphenylphosphit geeignet.

Im allgemeinen setzt man 0,1 bis 10 Gew.-Teile, bevorzugt 0,25 bis 5 Gew.-Teile und besonders bevorzugt 0,5 bis 4 Gew.-Teile aromatische Hydroxylgruppen enthaltendes Polymerisat (jeweils bezogen auf 100 Gew.-Teile zu stabilisierendes Polymer) zu.

Dabei kann das aromatische Hydroxylgruppen enthaltende Polymerisat in fester Form, in Lösung oder in Form einer Dispersion oder Emulsion zu dem Polymermaterial zugegeben werden.

Je nach Form des zu stabilisierenden Polymeren arbeitet man auf Knetern, Walzen, in Emulsion oder in Lösung ein.

### Beispiele und Vergleichsbeispiele

Teile sind immer Gewichtsteile

### Beispiel 1

### Herstellung von 2,5-Dimethoxybenzylbromid

2,5-Dimethoxybenzylbromid wurde nach einer modifizierten Vorschrift von A.L. Shulgin und E.M. Gal, J. Chem. Soc. (London), 1316 (1953) hergestellt.

Zu einer Lösung von 20 ml (138,9 mmol) 2,5-Dimethoxybenzylalkohol in 200 ml trockenem CCl₄ wurde im Verlauf einer Stunde eine Lösung von 4,35 ml (46,3 mmol) PBr₃ in 60 ml CCl₄ unter Eiskühlung zugetropft und das resultierende Gemisch 15 h unter Feuchtigkeitsausschluß bei 20°C gerührt. Nach Dekantieren der CCl₄-Phase und Waschen der anorganischen Phase (phosphorige Säure) mit CCl₄ wurden die vereinigten organischen Phasen an neutralem Aluminiumoxid (Alumina Woelm N-Super I) chromatographiert und eingeengt. Das Rohprodukt wurde durch Sublimation im Hochvakuum (T = 80 - 100°C; 0,1 mbar) gereinigt; weiße Nadeln (Schmelzpunkt 74,5°C, Messung mit Perkin Elmer DSC 7) (lit. 75-76°C). Ausbeute 20,2 g = 45 % der Theorie.

### Beispiel 2

### Umsetzung eines lebenden Polystyrylanions mit 1,1-Diphenylethylen und danach mit 2,5-Dimethoxybenzylbromid

Zu einem Gemisch aus 120 ml Toluol und 10 ml THF wurden mittels einer Spritze 11,5 ml (0,1 mol) Styrol gegeben und mit einem Eisbad gekühlt. Bei Zugabe von 5 mmol sec.-BuLi in Cyclohexan/Isopentan unter schnellem Rühren erfolgt eine momentane Verfärbung nach kirschrot (in reinem Toluol organgerot). Nach Beendigung der starken Wärmeentwicklung (ca. 3 min) wurde die Lösung noch 2 h bei Raumtemperatur gerührt. Danach erfolgte Zugabe von 6 mmol 1,1-Diphenylethylen, wobei eine rotviolette Färbung auftrat. Nach weiterem 1 stündigem Rühren wurde die Lösung mit einer Spritze aufgenommen und zu einer Lösung von 2,31 g (10 mmol) des in Beispiel 1 beschriebenen 2,5-Dimethoxybenzylbromids in 100 ml Toluol unter schnellem Rühren zugetropft. Isolierung des Polymeren erfolgte durch Eintropfen der Reaktionslösung in 1000 ml stickstoffgesättigtes Methanol.

### Beispiel 3

### Etherspaltung mit Iodtrimethylsilan

Zu einer Lösung von 10,39 g (4,478 mmol) des in Beispiel 2 beschriebenen Polymeren in 60 ml CHCl₃ (über Alumina Woelm b von Ethanol befreit) wurde unter Schutzgas 1,65 ml (11,64 mmol) Me₃SiI gegeben und die braun-violett gefärbte Lösung 72 h unter Schutzgasatmosphäre gerührt. Nach Zugabe von 10 ml H₂O wurde weitere 24 h gerührt und das Produkt anschließend durch Eintropfen in 800 ml Methanol gefällt. Das gelbe Produkt wurde in 30 ml Chloroform gelöst und mit einer Lösung von 3 g Na₂S₂O₄ in 20 ml Wasser 60 min kräftig geschüttelt. Die Fällung des Polymeren in Methanol lieferte einen weißen Feststoff, welcher nach Umfällen aus THF und intensivem Waschen mit H₂O/Methanol in Hochvakuum getrocknet wurde. Ausbeute: 8,29 g = 79,8 % der Theorie.

### Beispiel 4

### Prüfung der Wirksamkeit in Polypropylen

Handelsübliches Polypropylen-Granulat wird 8 h in einer Soxhlet-Apparatur mit Methylenchorid extrahiert, um den vorhandenen Stabilisator zu entfernen. Anschließend trocknet man 12 h im Vakuum.

In einem Laborkneter wird der zu prüfende Stabilisator in der Schmelze bei 200°C 4 Minuten lang eingearbeitet. Das Polypropylen wird anschließend zu 0,5 mm dicken Platten gepreßt (7 Min. bei 200°C und 10 bar, 10 Min. unter Druck abkühlen). Jeweils Triplikate werden bei 150°C im Umluftschrank gelagert. Gemessen wird die Zeit bis zum Einsetzen der oxidativen Zerstörung (Braunfärbung, Versprödung). Die Ergebnisse der Alterungsversuche sind in Tabelle 1 aufgeführt.

**Tabelle 1**

| Zusatzmenge an Polymer aus Beispiel 3 (Gew.-Teile pro 100 Gew.-Teile Polypropylen) | Zeit bis zur Zerstörung (Tage) |
|---|---|
| - | 6 |
| 0,5 | 27 |
| 1,0 | 29 |

### Beispiel 5

### Prüfung der Wirksamkeit in ABS

100 Teile eines Pfropfkautschukpulvers, das durch Emulsionspolymerisation eines Gemisches aus 36 Gew.-Teilen Styrol und 14 Gew.-Teilen Acrylnitril in Gegenwart von 50 Gew.-Teilen eines in Latexform vorliegenden Polybutadiens mit einem durch Lichtstreuung gemessenen mittleren Teilchendurchmesser von 0,35 µm und anschließende Koagulation unter Verwendung einer 1 %igen wäßrigen Lösung eines Essigsäure/Magnesiumsulfat-1:1-Gemisches sowie Trocknung im Vakuum bei Raumtemperatur hergestellt wurde, wurden
a) ohne Zusatz eines Stabilisators,
b) mit 0,5 Teilen des Polymeren aus Beispiel 3
c) mit 1,0 Teilen des Polymeren aus Beispiel 3
in einem Laborkneter vermischt und anschließend mit einer Heizpresse innerhalb 3 Minuten bei 200 bar und 160°C zu Platten mit einer Dicke von ca. 0,16 mm verpreßt.

An den Platten wurden dynamische DSC-Messungen (Aufheizrate: 20 K/min, Spülgas: O₂ 3,6 l/h, Meßgerät: DSC 2 von Perkin Elmer), sowie isotherme DSC-Messungen bei 150°C (Spülgas Sauerstoff 3,6 l/h) durchgeführt, die Ergebnisse sind in Tabelle 2 zusammengestellt.

**Tabelle 2**

| Zusatzmenge an Polymer aus Beispiel 3 (Gew.-Tle. pro 100 Gew.-Tle. Pfropfkautschuk) | Beginn der exothermen Reaktion (°C) (dynamische DSC) | Induktionszeit bis zur maximalen Oxidationsrate [min] (isotherme DSC) |
|---|---|---|
| - | 186 | 6 |
| 0,5 | 198,5 | 16 |
| 1,0 | 200 | 18 |

## Patentansprüche

1. Polymere Dihydroxyverbindungen (I) 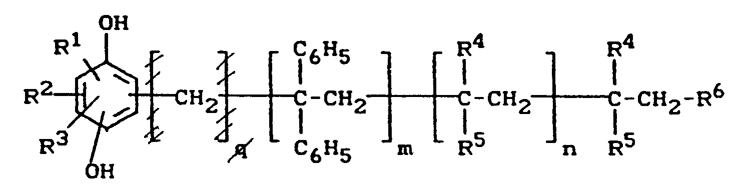 wobei
R¹, R², R³ = H, C₁₋₄-Alkyl,
R⁴ = H, C₁₋₄-Alkyl,
R⁵ = -C₆H₅, -C₆H₄CH₃, -CH=CH₂, -CO₂R⁷, Heteroaryl,
R⁶ = C₁₋₄-Alkyl, Aryl, H,
R⁷ = C₁₋₄-Alkyl,
m = 0,1,
n = 5 bis 100,

2. Verfahren zur Herstellung der polymeren Dihydroxyverbindungen (I) gemäß Anspruch 1, dadurch gekennzeichnet, daß man
a) ein geeignetes Vinylmonomer anionisch Polymerisiert,
gegebenenfalls
b) das lebende Anion mit 1,1-Diphenylethylen umsetzt,
c) das resultierende Produkt mit einer Verbindung der Formel (II) umsetzt, 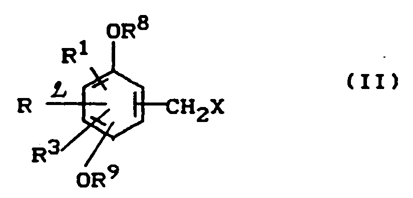
R⁸, R⁹ = C₁-C₄-Alkyl, -SiR¹⁰R¹¹R¹²,
R¹⁰, R¹¹, R¹² = C₁₋₄-Alkyl, -C₆H₅,
X = Cl, Br, I
d) das danach resultierende Polymere isoliert und
e) die Schutzgruppen R⁸ und R⁹ abspaltet.

3. Synthetische Polymere, insbesondere thermoplastische Formmassen, gekennzeichnet durch einen Gehalt von 0,1 bis 10 Gew.-% einer polymeren Dihydroxyverbindung gemäß Anspruch 1.

## Claims

1. Polymeric dihydroxy compounds corresponding to the following formula 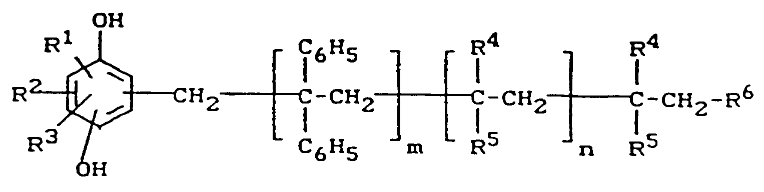 in which
R¹, R², R³ = H, C₁₋₄ alkyl,
R⁴ = H, C₁₋₄ alkyl,
R⁵ = -C₆H₅, -C₆H₄CH₃, -CH=CH₂, -CO₂R⁷, heteroaryl,
R⁶ = C₁₋₄ alkyl, aryl, H,
R⁷ = C₁₋₄ alkyl,
m = 0, 1,
n = 5 to 100

2. A process for the production of the polymeric dihydroxy compounds (I) claimed in claim 1, characterized in that
a) a suitable vinyl monomer is anionically polymerized,
b) the living anion is optionally reacted with 1,1-diphenyl ethylene,
c) the resulting product is reacted with a compound corresponding to formula (II) 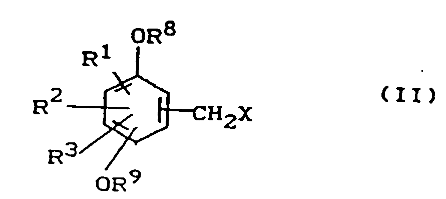 R⁸, R⁹ = C₁₋₄ alkyl, -SiR¹⁰R¹¹R¹²,
R¹⁰, R¹¹, R¹² = C₁₋₄ alkyl, -C₆H₅,
X = Cl, Br, I
d) the resulting polymer is isolated and
e) the protective groups R⁸ and R⁹ are eliminated.

3. Synthetic polymers, more especially thermoplastic moulding compositions, characterized by a content of 0.1 to 10% by weight of a polymeric dihydroxy compound according to claim 1.

## Revendications

1. Composés dihydroxylés polymères I 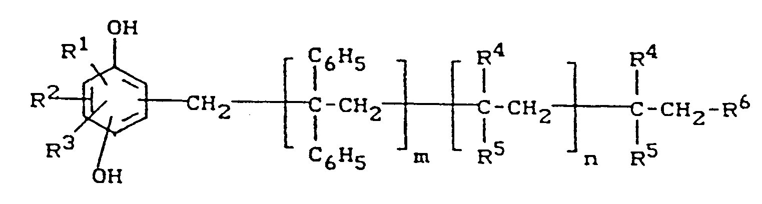 dans lesquels
R¹, R², R³ = H, alkyle en C₁-C₄,
R⁴ = H, alkyle en C₁-C₄,
R⁵ = -C₆H₅,-C₆H₄CH₃,-CH=CH₂,-CO₂R⁷, hétéroaryle,
R⁶ = alkyle en C₁-C₄, aryle, H,
R⁷ = alkyle en C₁-C₄,
m =0,1,
n = 5 à 100.

2. Procédé de préparation des composés dihydroxylés polymères I selon la revendication 1, caractérisé en ce que
a) on soumet un monomère vinylique approprié à polymérisation anionique, le cas échéant
b) on fait réagir l'anion vivant avec le 1,1-diphényléthylène,
c) on fait réagir le produit obtenu avec un composé de formule II 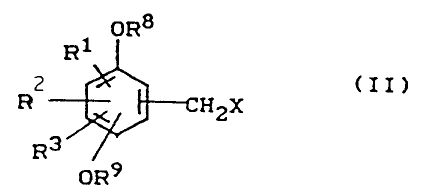 dans laquelle
R⁸, R⁹ = alkyle en C₁-C₄, -SiR¹⁰R¹¹R¹²,
R¹⁰, R¹¹, R¹² = alkyle en C₁-C₄,-C₆H₅,
X = Cl, Br, I,
d) on isole le polymère ainsi formé et
e) on élimine les groupes protecteurs R⁸ et R⁹.

3. Polymères synthétiques, en particulier matières à mouler thermoplastiques, caractérisés en ce qu'ils contiennent de 0,1 à 10 % en poids d'un composé dihydroxylé polymère selon la revendication 1.
